# EUROPÄISCHE PATENTANMELDUNG

(11) **EP 0 528 143 A1**
(43) Veröffentlichungstag der Anmeldung: **24.02.1993**
(21) Anmeldenummer: 92110885.8
(22) Anmeldetag: 26.06.1992
(51) Int. Cl.: B62D 21/20, B62D 53/08

(54) **Sattelanhänger**

(30) Priorität: 16.08.1991 DE 9110124 U
(71) Anmelder: Maschinenfabriken Bernard Krone GmbH, D-48480 Spelle (DE)
(72) Erfinder: Focks, Hubert, W-4450 Lingen/Ems (DE); Evers, Heinz, W-4472 Haren-Tinnen (DE)
(74) Vertreter: Busse & Busse Patentanwälte

(57) **Zusammenfassung**

Ein Sattelanhänger für Container ist mit einem mit Königszapfen (5) versehenen Vorderteil (1) ausgebildet, das zwei zumindest im Bereich des Königszapfens (5) über Querstreben (7,8,9,10) verbundene, untereinander gleiche Längsträger (2,3) aufweist, die mit einem Doppel-T-Profil mit vertikalem Hauptsteg (16,17), horizontalem oberen Gurtsteg (12,13) und formgleichem horizontalen unteren Gurtsteg (14,15) versehen sind, wobei die Hauptstege (16,17) im rückwärtigen Bereich (30,31) des Vorderteils (1) in Fahrtrichtung einander annähern und im vorderen Bereich (28,29) des Vorderteils (1) zueinander parallel verlaufen. Die Gurtstege (12,13,14,15) der Längsträger (2,3) weisen dabei in Draufsicht eine asymmetrische Kontur auf und die Hauptstege (16,17) haben innerhalb der Gurtstegkontur einen asymmetrischen Verlauf.

## Beschreibung

Die Erfindung betrifft einen Sattelanhänger für Container nach dem Oberbegriff des Anspruchs 1.

Bei bekannten Sattelanhängern dieser Art, die mit einem mit Königszapfen versehenen Vorderteil am Zugfahrzeug abgestützt sind, weist der Vorderteil untereinander gleiche Längsträger auf, die mit einem Doppel-T-Profil gleichbleibenden Querschnitts ausgebildet sind. Diese Längsträger sind einstückig gewalzt und haben vertikale Hauptstege, die im rückwärtigen Bereich des Vorderteils aufeinander zulaufend ausgerichtet sind und dann in eine im vorderen Bereich des Vorderteils parallele Ausrichtung übergehen. Ein derartiger, durch Biegen geformter Längsträger hat ein hohes Gewicht, eine erhebliche Höhe und beeinflußt den Aufwand der Herstellung des Vorderteils nachteilig.

Der Erfindung liegt die Aufgabe zugrunde, einen Sattelanhänger für Container mit einem mit Königszapfen versehenen Vorderteil zu schaffen, das unter Beibehaltung der erforderlichen Festigkeit und Verwindungssteifigkeit mit geringerem Gewicht und verringerter Höhe ausgeführt werden kann.

Ausgehend von einem Sattelanhänger für Container der eingangs angegebenen Art wird diese Aufgabe nach der Erfindung durch eine Ausgestaltung mit den kennzeichnenden Merkmalen des Anspruchs 1 gelöst. Hinsichtlich wesentlicher weiterer Ausgestaltungen wird auf die Ansprüche 2 bis 15 verwiesen.

Die Gestaltung der Längsträger optimierte deren Querschnitte unter dem Gesichtspunkt der jeweils aufzunehmenden Belastungen mit der Folge wesentlich verringerten Gewichts und geringerer Höhe. Derartige Längsträger sind zudem in geschweißter Verbundkonstruktion preisgünstig herstellbar, wobei der Sattelanhänger in seinem Vorderteil an die Aufnahme unterschiedlicher Belastungen mit geringem Aufwand durch Veränderung der Zuschnitte für die Haupt- und die Gurtstege anpaßbar ist.

Weitere Einzelheiten und Vorteile ergeben sich aus der nachfolgenden Beschreibung und der Zeichnung, in der ein bevorzugtes Ausführungsbeispiel des Gegenstandes der Erfindung schematisch näher veranschaulicht ist. In der Zeichnung zeigen:
- Fig. 1: eine vereinfachte Draufsicht auf einen erfindungsgemäßen Vorderteil eines Chassis eines Sattelanhängers,
- Fig. 2: einen Querschnitt nach der Linie II-II in Fig. 1
- Fig. 3: einen Querschnitt nach der Linie III-III in Fig. 1,
- Fig. 4: einen Querschnitt nach der Linie IV-IV in Fig. 1,
- Fig. 5: einen Querschnitt nach der Linie V-V in Fig. 1, und
- Fig. 6: eine schematische Seitenansicht eines Längsträgers des erfindungsgemäßen Chassisvorderteils gemäß Fig. 1.

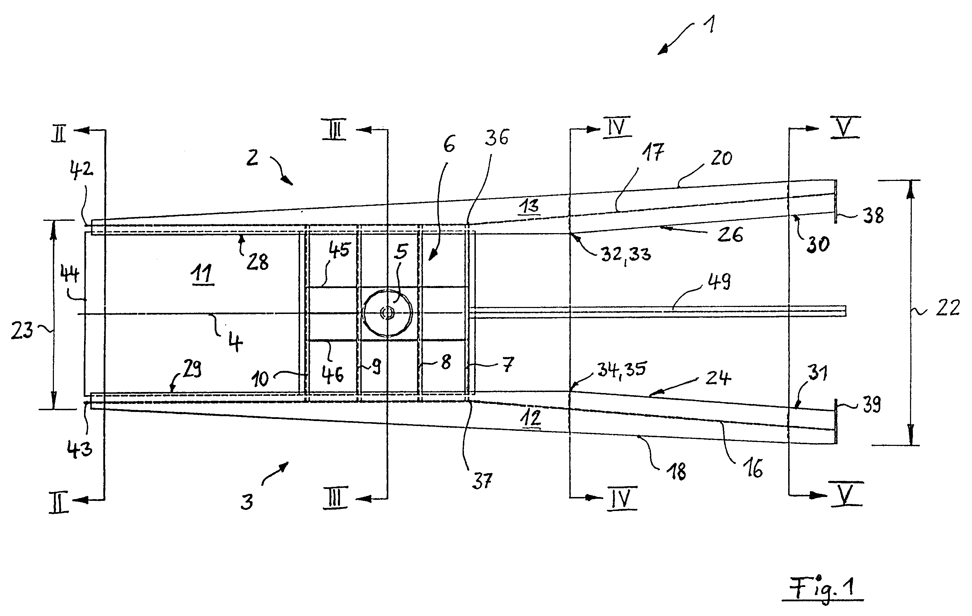

Der in Fig. 1 dargestellte vorderteil 1 eines Chassis für einen Sattelanhänger weist zwei untereinander gleiche Längsträger 2,3 auf, die spiegelsymmetrisch zu einer fahrtrichtungsparallelen Mittelebene 4 angeordnet sind. Diese Längsträger 2,3 bilden mit Querstreben 7,8,9,10 gleicher Länge und einer unteren Verbindungsplatte 11 ein Rahmenwerk 6 im Bereich eines Königszapfens 5.

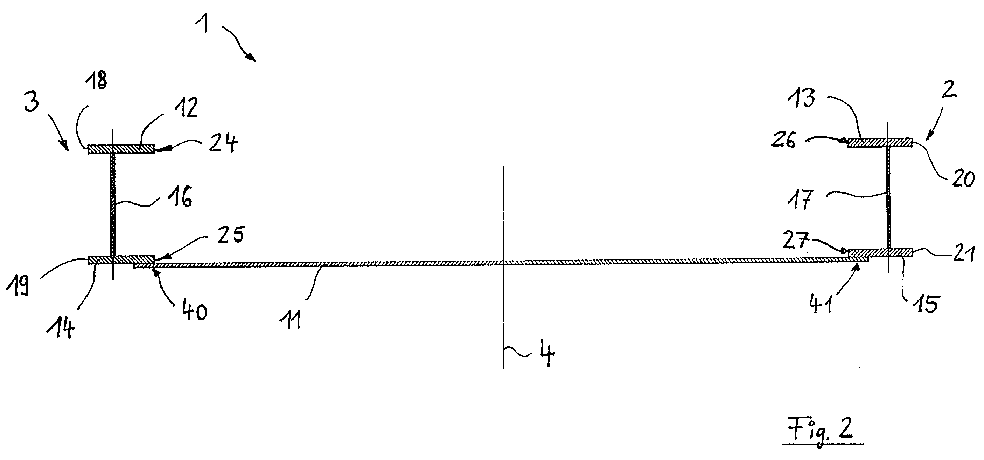

In Fig. 2 sind in einen ersten Querschnitt die Profile der Längsträger 2,3 verdeutlicht, die mit oberen Gurtstegen 12,13, unteren Gurtstegen 14,15 und zwischenliegendem vertikalen Hauptsteg 16,17 ein asymmetrisches Doppel-T bilden. Die Gurtstege 12,13,14,15 sind dabei mit einer in der Draufsicht gemäß Fig. 1 verdeutlichten asymmetrischen Kontur ausgebildet, und die Hauptstege 16,17 haben innerhalb dieser Kontur einen asymmetrischen Verlauf.

Die Gurtstege 12,14 bzw. 13,15 bieten über ihre gesamte Länge (Fig. 1) in einer zur Mittelebene 4 parallelen Fahrtrichtung Außenkanten 18,19 bzw. 20,21 dar, die über ihre gesamte Länge gerade sind und V-förmig aufeinander zulaufen, so daß sich das Vorderteil 1 insgesamt von einer hinteren Breite 22 zu einer vorderen Breite 23 hin verjüngt.

Die Gurtstege 12,13 bzw. 14,15 weisen ferner jeweils eine abgewinkelte Innenkante 24,25 bzw. 26,27 auf, die im vorderen Teil 28,29 (Fig. 1) der Gurtstege parallel zur Fahrtrichtung bzw. zur Mittelebene 4 verlaufen und in einem rückwärtigen Teil 30,31 jeweils parallel zur Außenkante 18,19 bzw. 20,21 konvergierend ausgerichtet sind. Die Innenkanten 24,25 bzw. 26,27 bilden dabei am Übergang vom vorderen Teil 29,29 zum rückwärtigen Teil 30,31 der Gurtstege 12,13 bzw. 14,15 Knickpunkte 32,33 bzw. 34,35, die vorteilhaft etwa im Bereich des rückwärtigen Drittelpunktes des Vorderteils 1 gelegen sind.

Die Hauptstege 16,17 weisen ebenfalls jeweils einen Knickpunkt 36,37 (Fig. 1) auf, an dem die Hauptstege 16,17 aus dem konvergierenden Verlauf im rückwärtigen Teil 30,31 in den fahrtrichtungsparallelen Verlauf im vorderen Teil 28,29 übergehen. Diese Knickpunkte 36,37 sind in Fahrtrichtung im Abstand vor den Knickpunkten 32 bis 35 der Innenkanten 24 bis 27 der Gurtstege 12 bis 15 gelegen.

Im fahrtrichtungsparallelen vorderen Teil 28,29 sind die Hauptstege 16,17 näher zur jeweiligen Innenkante 24 bis 27 als zur Außenkante 18 bis 21 der jeweiligen Gurtstege 12 bis 15 gelegen. Im konvergierenden rückwärtigen Teil 30,31 der Gurtstege 12 bis 15 sind hingegen die Hauptstege 16,17 näher zur Außenkante als zur Innenkante der Gurtstege 12 bis 15 gelegen und enden an einer Abschlußplatte 38,39.

Zweckmäßig sind sowohl die Hauptstege 16,17 als auch die Gurtstege 12 bis 15 von gesonderten flachen Stahlblech-Zuschnitten gebildet und durch Verschweißen zu den Längsträgern 2,3 verbunden. Damit ist nicht nur eine optimale Materialausnutzung gegeben, sondern es besteht auch die einfache Möglichkeit zur Anpassung der Längsträger 2,3 an unterschiedliche Belastungsanforderungen durch Ändern der Zuschnitte, die stets mit Sicherheit die in der Einbaulage auftretenden Druck- und Biegebelastungen aufnehmen können.

Zur weiteren Stabilisierung kann der Vorderteil 1 mit der in Fig. 2 näher veranschaulichten Verbindungsplatte 11 versehen sein, die sich zumindest im Bereich der fahrtrichtungsparallelen vorderen Teile 28,29 der Innenkanten 25,27 horizontal unterhalb der unteren Gurtstege 14,15 erstreckt, im Bereich ihrer Längsränder 40,41 die unteren Gurtstege 14,15 untergreift und an diesen angeschweißt ist. Die Verbindungsplatte 11 erstreckt sich dabei etwa vom Knickpunkt 36,37 der Hauptstege 16,17 bis zu deren vorderen Enden 42 bzw. 43. Ein vorderer Querrand 44 der Verbindungsplatte 11 kann dabei bis über die vorderen Enden 42,43 hinaus verlängert sein (Fig. 1).

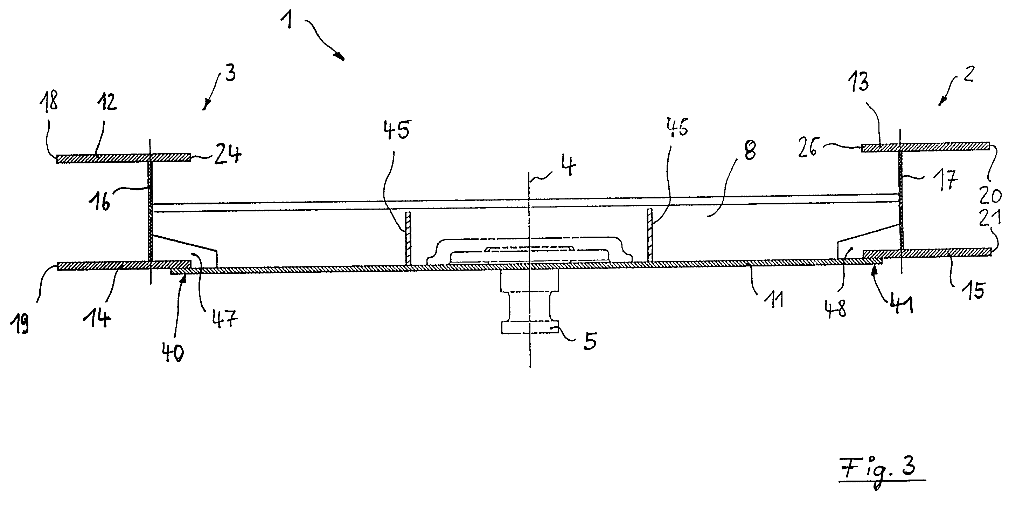

Fig. 3 veranschaulicht mit seinem Querschnitt durch den Bereich des Königszapfens 5 in Fig. 1, daß die Querstreben 7,8,9,10 jeweils stirnseitig mit den Hauptstegen 16,17 und entlang ihrer Unterseite mit dem Verbindungsblech 11 verbunden sind.

Zur weiteren Stabilisierung im Bereich des Königszapfens 5 können parallel zur Mittelebene 4 weitere Längsstreben 45,46 zwischen den gleichmäßig beabstandeten Querstreben 7 bis 10 eingeschweißt sein. In zweckmäßiger Ausbildung ist die Querstrebe 7 im Bereich des Knickpunktes 36,37 der Stege 16,17 angeordnet und die weiteren Querstreben 8,9,10 dieser, den Königszapfen 5 mittig aufnehmend, in gleichmäßigem Abstand vorgeordnet (Fig. 1).

Die Querstreben 7,8,9,10 sind als T-Profile ausgebildet und weisen endseitig zu den unteren Gurtstegen 14,15 hin gerichtet Ausklinkungen 47,48 auf, die, ohne die Stabilität zu beeinflussen, einen Durchlaß, z.B. für Versorgungsleitungen, bilden (Fig. 3).

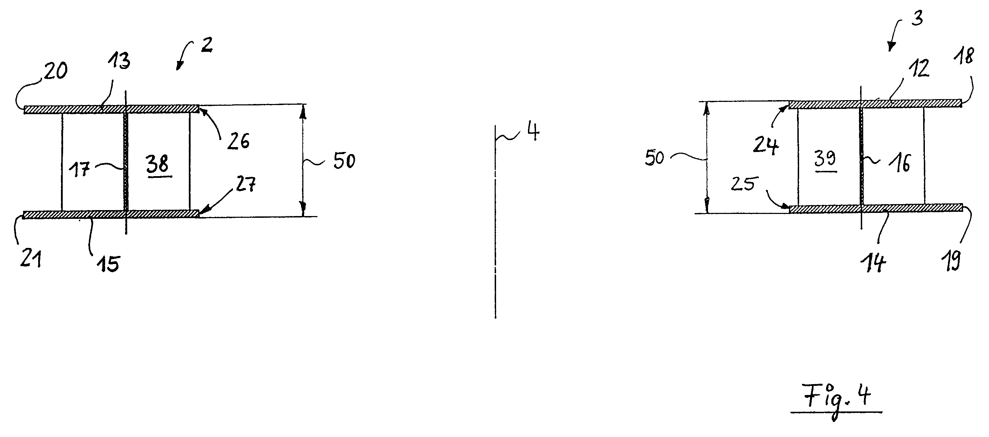

Fig. 4 zeigt die Längsträger 2,3 in einem Querschnitt im rückwärtigen Teil 30,31 der Seitenkanten 24 bis 27. In diesem rückwärtigen Bereich kann dabei eine im Querschnitt nicht näher veranschaulichte innere Längsstrebe 49 (Fig. 1) längs der Mittelebene 4 vorgesehen sein.

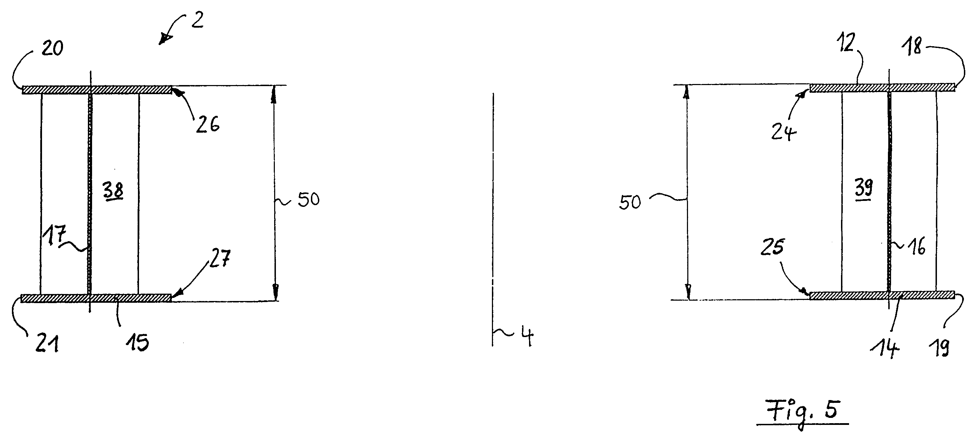

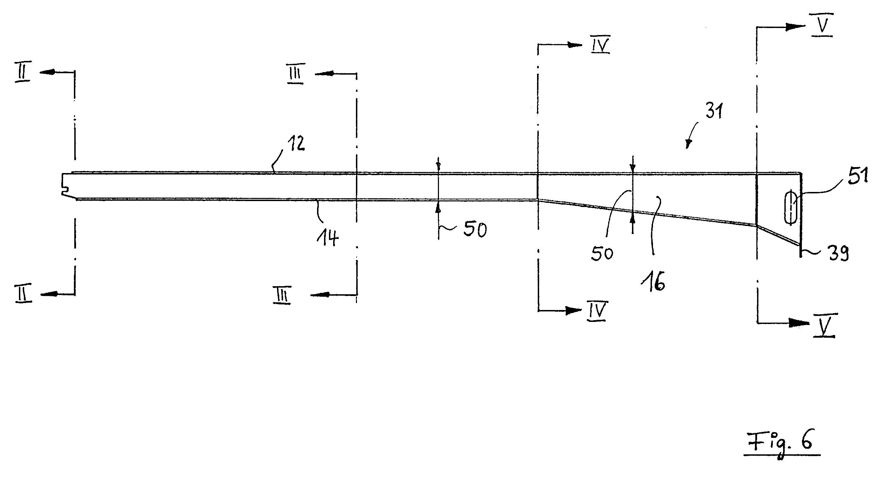

Fig. 5 und Fig. 6 machen deutlich, daß sich die Trägerhöhe 50 im rückwärtigen Teil 30,31 durch entsprechenden Zuschnitt der Hauptstege 16,17 vergrößert, um einen Übergang des Vorderteiles 1 zu einem an die Abschlußplatten 38,39 anschließbaren Hauptteil (nicht dargestellt) des Chassis des Sattelanhängers zu gewährleisten.

Die schematische Seitenansicht des Längsträgers 3 in Fig. 6 verdeutlicht, daß der obere Gurtsteg 12 bis zum senkrechten Übergang auf die Abschlußplatte 39 waagerecht ausgerichtet ist und der untere Gurtsteg 14 mit zunehmender Trägerhöhe 50 abwärts geneigt zum oberen Gurtsteg 12 verläuft.

Im Bereich nahe der Abschlußplatte 39 ist die Höhe des Hauptstegs 16 auf ein Maß vergrößert, das die Ausbildung eines Langloches 51 für die Anbringung einer Klappstütze (nicht dargestellt) ermöglicht, die in diesem Bereich des vorderteils 1 den Sattelanhänger hinreichend stabil abstützen kann.

## Patentansprüche

1. Sattelanhänger für Container mit einem mit Königszapfen versehenen Vorderteil, das zwei zumindest im Bereich des Königszapfens (5) über Querstreben (7,8,9,10) verbundene, untereinander gleiche Längsträger (2,3) aufweist, die mit einem Doppel-T-Profil mit vertikalem Hauptsteg (16,17), horizontalem oberen Gurtsteg (12,13) und formgleichem horizontalen unteren Gurtsteg (14,15) versehen sind, wobei die Hauptstege (16,17) im rückwärtigen Bereich (30,31) des Vorderteils (1) in Fahrtrichtung einander annähern und im vorderen Bereich (28,29) des Vorderteils (1) zueinander parallel verlaufen, **dadurch gekennzeichnet,** daß die Gurtstege (12,13,14,15) der Längsträger (2,3) in Draufsicht eine asymmetrische Kontur aufweisen und die Hauptstege (16,17) innerhalb der Gurtstegkontur einen asymmetrischen Verlauf haben.

2. Sattelanhänger nach Anspruch 1, **dadurch gekennzeichnet**, daß die Gurtstege (12,13,14,15) über ihre gesamte Länge gerade, in Fahrtrichtung V-förmig aufeinanderzulaufende Außenkanten (18,19,20,21) aufweisen.

3. Sattelanhänger nach Anspruch 1 oder 2, **dadurch gekennzeichnet,** daß die Gurtstege (12,13,14,15) eine abgewinkelte Innenkante (24,25,26,27) aufweisen.

4. Sattelanhänger nach Anspruch 3, **dadurch gekennzeichnet,** daß die Innenkante (24,25,26,27) im vorderen Bereich (28,29) der Gurtstege (12,13,14,15) parallel zur Fahrtrichtung verläuft und in einem rückwärtigen Teil (30,31) parallel zur Außenkante (18,19,20,21) ausgerichtet ist.

5. Sattelanhänger nach Anspruch 3 oder 4, **dadurch gekennzeichnet,** daß die Innenkante (24,25,26,27) in einen etwa im Bereich des rückwärtigen Drittelpunktes des Vorderteils (12) gelegenen Knickpunkt (32,33,34,35) vom vorderen Teil (28,29) in den rückwärtigen Teil (30,31) übergeht.

6. Sattelanhänger nach Anspruch 1 bis 5, **dadurch gekennzeichnet,** daß der Hauptsteg (16,17) an einem Knickpunkt (36,37) aus dem konvergierenden in den fahrtrichtungsparallelen Verlauf übergeht, der im Abstand vor dem Knickpunkt (32,33, 34,35) der Innenkante (24,25,26,27) der Gurtstege (12,13,14,15) gelegen ist.

7. Sattelanhänger nach Anspruch 1 bis 6, **dadurch gekennzeichnet,** daß der Hauptsteg (16,17) in seinem fahrtrichtungsparallelen Teil näher zur Innenkante (24,25,26,27) als zur Außenkante (18,19,20,21) der Gurtstege (12,13,14,15) gelegen ist.

8. Sattelanhänger nach Anspruch 1 bis 7, **dadurch gekennzeichnet,** daß der konvergierende Teil des Hauptstegs (16,17) am Ende der Gurtstege (12,13,14,15) näher zur Außenkante (18,19,20,21) als zur Innenkante (24,25,26,27) der Gurtstege (12,13,14,15) gelegen ist.

9. Sattelanhänger nach Anspruch 1 bis 8, **dadurch gekennzeichnet,** daß die Hauptstege (16,17) und die Gurtstege (12,13,14,15) von gesonderten Flachblech-Zuschnitten gebildet und durch Verschweißen mit den Längsträgern (2,3) verbunden sind.

10. Sattelanhänger nach Anspruch 1 bis 9, **dadurch gekennzeichnet,** daß im fahrtrichtungsparallelen Bereich der Hauptstege (16,17) eine horizontale Verbindungsplatte (11) vorgesehen ist, die mit ihren Längsrändern (40,41) die unteren Gurtstege (14,15) untergreift und an diesen angeschweißt ist.

11. Sattelanhänger nach Anspruch 10, **dadurch gekennzeichnet,** daß sich die Verbindungsplatte (11) etwa vom Knickpunkt (36,37) der Hauptstege (16,17) bis etwa zu deren vorderen Enden (42,43) erstreckt.

12. Sattelanhänger nach Anspruch 10 oder 11, **dadurch gekennzeichnet,** daß ein vorderer Querrand der Verbindungsplatte (11) in Draufsicht im Abstand vor den Hauptstegen (16,17) endet.

13. Sattelanhänger nach Anspruch 1 bis 12, **dadurch gekennzeichnet,** daß im Bereich des Knickpunktes (36,37) der Hauptstege (16,17) eine erste Querstrebe (7) vorgesehen ist, die stirnseitig mit den Hauptstegen (16,17) und unterseitig mit dem Verbindungsblech (11) verbunden ist.

14. Sattelanhänger nach Anspruch 13, **dadurch gekennzeichnet,** daß der ersten Querstrebe (7) drei weitere Querstreben (8,9,10) in gleichmäßigem Abstand vorgeordnet sind und der Königszapfen (5) zwischen der zweiten und der dritten Strebe (8,9) angeordnet und am Verbindungsblech (11) festgelegt ist.

15. Sattelanhänger nach Anspruch 13 oder 14, **dadurch gekennzeichnet,** daß die Querstreben (7,8,9,10) im Bereich der unteren Gurtstege (14,15) ausgeklinkt sind und ein T-Profil aufweisen.
